# EUROPEAN PATENT APPLICATION

(11) **EP 4 755 770 A1**
(43) Date of publication of application: **10.06.2026**
(21) Application number: 25220502.6
(22) Date of filing: 03.12.2025
(51) Int. Cl.: B62D 65/18

(54) **ROAD VEHICLE BODY PROCESSING LINE**

(30) Priority: 06.12.2024 IT 202400027765
(71) Applicant: FERRARI S.p.A., 41100 Modena (IT)
(72) Inventor: FRONDUTO, Luigi, 41100 MODENA (IT)
(74) Representative: Studio Torta S.p.A.

(57) **Abstract**

A processing line for road vehicle bodies (2) comprising at least four processing stations (3) mounted in succession along a processing path (P1); and a first feeding unit (5) to feed in succession a plurality of bodies (2) along the processing path (P1) and through the processing stations (3); the processing stations (3) being distributed along two parallel branches (R1, R2) of the processing path (P1).

## Description

### CROSS-REFERENCE TO RELATED APPLICATIONS

This patent application claims priority from Italian patent application no. 102024000027765 filed on December 6, 2024, the entire disclosure of which is incorporated herein by reference.

### TECHNICAL FIELD

The present invention relates to a processing line for road vehicle bodies.

### BACKGROUND

In particular, the present invention relates to a processing line for road vehicle bodies of the type comprising a plurality of processing stations mounted in succession along a processing path; and a first feeding unit to feed in succession a plurality of bodies along the processing path and through the processing stations.

The first feeding unit normally comprises a suspended guide device and a plurality of movable transport devices along the suspended guide device configured to receive and retain the bodies and feed them through the processing stations.

The processing line further comprises a second feeding unit connected to the first feeding unit in the area of a first transfer station for transferring the bodies from the second feeding unit to the first feeding unit and a second transfer station for transferring the bodies from the first feeding unit to the second feeding unit.

The second feeding unit normally comprises a floor guide device and a plurality of movable support carriages that move along the floor guide device and are configured to define respective support surfaces for relative bodies.

The floor guide device of the second feeding unit extends upstream of the first transfer station, downstream of the second transfer station, and between the first and the second transfer station along the processing path.

Since the processing path is rectilinear and the processing stations are aligned with one another along the processing path, the known processing lines of the type described above have relatively large overall dimensions, oblige the transport devices to travel a relatively long distance to return from the second transfer station to the first transfer station, and therefore entail the use of a relatively high number of transport devices.

Furthermore, the known processing lines of the type described above have the further drawback that the floor guide device of the second feeding unit extends also along the processing path, in the area of which the bodies are retained and advanced by the transport devices and the support carriages are empty. Consequently, the second feeding unit is relatively complex and costly.

### SUMMARY

The object of the present invention is to provide a road vehicle body processing line which is free from the above drawbacks and which is simple and inexpensive to produce.

According to the present invention, a road vehicle body processing line is provided as claimed in the attached claims.

### BRIEF DESCRIPTION OF THE DRAWINGS

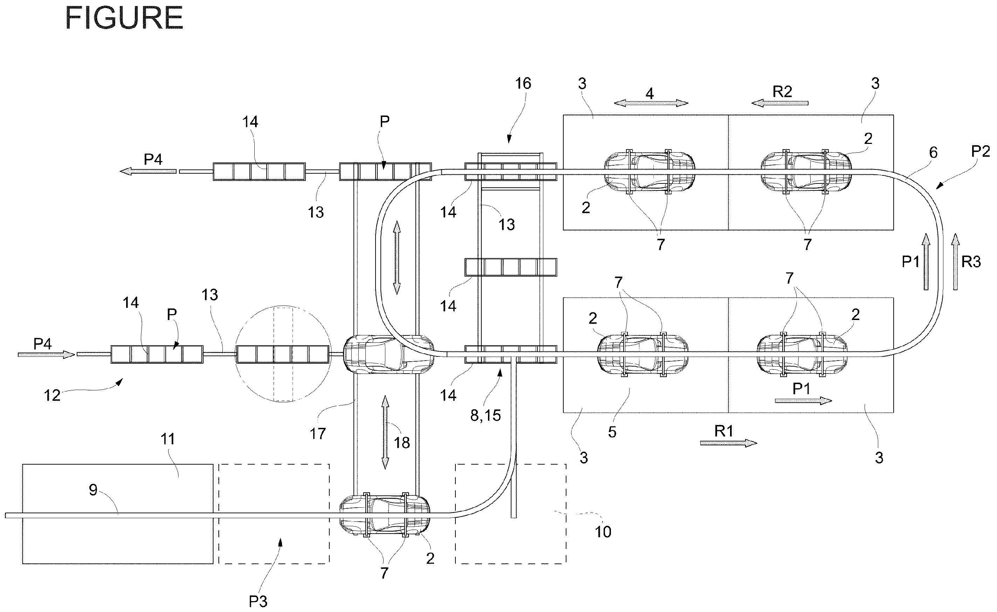

The present invention will now be described with reference to the attached figure, which schematically shows in plan view and with parts removed for clarity a non-limiting embodiment example.

### DESCRIPTION OF EMBODIMENTS

With reference to the attached figure, the number 1 indicates, as a whole, a processing line for bodies 2 of road vehicles known and not shown.

The processing line 1 comprises at least four processing stations 3 of known type mounted in succession along a processing path P1 comprising, in turn, two branches R1, R2 parallel to each other and to a horizontal direction 4 and a branch R3 for connecting the branches R1, R2 to each other.

The stations 3 are distributed along the two branches R1, R2, and in this case are arranged two on the branch R1 and two on the branch R2.

The processing line 1 is provided with a first feeding unit 5 for advancing in succession a plurality of bodies 2 along the path P1 and through the stations 3.

The unit 5 extends along a main path P2 closed in a loop and overlapping the branches R1, R2, R3 of the path P1, and comprises a suspended guide device 6 extending along the path P2.

The unit 5 is further provided with a plurality of transport assemblies 7 of known type, which are at least equal in number to the number of the stations 3, are hooked to the device 6, and protrude downwards from the device 6.

The assemblies 7 are movable along the device 6 and the path P2, and are configured to each receive and retain a relative body 2.

The unit 5 furthermore extends along a secondary path P3 connected to the path P2 in the area of a transfer station 8, and comprises a suspended guide device 9, which extends along the path P3, and is engaged in a sliding manner by the assemblies 7.

The path P3 extends through a maintenance station 10, in the area of which the personnel in charge carry out on the bodies 2 and/or on the transport assemblies 7 the checks scheduled by the use and maintenance plan, and through a training station 11, in the area of which the personnel in charge carry out on the bodies 2 the training scheduled by the training plan.

In this case, the unit 5 comprises a number of transport assemblies 7 greater than the number of stations 3, in particular five assemblies 7, of which four assemblies 7 are movable along the device 6 and the path P2 and one assembly 7 is movable along the device 9 and the path P3.

The processing line 1 is further provided with a second feeding unit 12 comprising a floor guide device 13 engaged in a sliding manner by a plurality of support carriages 14 defining respective support surfaces P for relative bodies 2.

The carriages 14 are movable along a feeding path P4 connected to the processing path P1 in the area of a transfer station 15 for transferring the bodies 2 from the unit 12 to the unit 5 and a transfer station 16 for transferring the bodies 2 from the unit 5 to the unit 12.

In this case, the station 15 coincides with the station 8.

The path P4 extends between the two transfer stations 15, 16 outside the processing path P1, and the carriages 14 are moved from the station 15 directly to the station 16 along a relatively short section of the path P4.

The processing line 1 further comprises a floor guide device 17, which extends in a horizontal direction 18 transverse to the direction 4, is connected to the path P3 and is further connected to the path P4 upstream of the station 15 and downstream of the station 16.

The device 17 allows:
some bodies 2 to be selectively transferred from the path P4 to the transport assembly 7 associated with the path P3 and in the training station 11; and
the bodies 2 processed in the station 11 to be transferred from the path P3 to the path P4 directly downstream of the station 16 avoiding the feeding thereof along the path P1.

The branches R1, R2 of the processing path P1 have some advantages consisting in the following:
the processing line 1 has a relatively high compactness and relatively reduced overall dimensions;
the number of transport assemblies 7 of the feeding unit 5 is relatively reduced; and
the carriages 14 are moved directly from the station 15 to the station 16 outside the processing path P1; consequently, the floor guide device 13 has a relatively reduced length and the processing stations 3 have a relatively reduced height and require relatively small volumes of ventilation air.

## Claims

1. A processing line for road vehicle bodies (2) comprising at least four processing stations (3) mounted in succession along a processing path (P1); and a first feeding unit (5) to feed in succession a plurality of bodies (2) along the processing path (P1) and through the processing stations (3); and **characterized in that** the processing stations (3) are distributed along two parallel branches (R1, R2) of the processing path (P1).

2. The processing line according to claim 1, wherein the first feeding unit (5) extends along a main path (P2) closed in a ring shape and overlapping the processing path (P1).

3. The processing line according to claim 2, wherein the first feeding unit (5) comprises a first suspended guide device (6) extending along the main path (P2).

4. The processing line according to claim 2 or 3, wherein the first feeding unit (5) also extends along a secondary path (P3) connected to the main path (P2) in the area of a transfer station (8).

5. The processing line according to claim 4, wherein the first feeding unit (5) further comprises a second suspended guide device (9) extending along the secondary path (P3).

6. The processing line according to claim 4 or 5, wherein the first feeding unit (5) comprises a plurality of transport assemblies (7), which are more in number than the number of processing stations (3), are configured to each hold a respective body (2) and are movable along the main path (P2) and the secondary path (P3).

7. The processing line according to any one of the claims from 4 to 6, wherein the secondary path (P3) extends through a maintenance station (10) for the bodies (2) and/or for the transport assemblies (7) and through a training station (11) for the assigned staff.

8. The processing line according to any one of the preceding claims and further comprising a second feeding unit (12) comprising, in turn, a plurality of support carriages (14), which define respective support surfaces (P) for relative bodies (2) and are movable along a feeding path (P4) connected to the processing path (P1) in the area of a transfer station (15) for transferring the bodies (2) from the second feeding unit (12) to the first feeding unit (5) and of a transfer station (16) for transferring the bodies (2) from the first feeding unit (5) to the second feeding unit (12).

9. The processing line according to claim 8, wherein the feeding path (P4) extends between the two transfer stations (15, 16) so that the support carriages (14) are advanced outside the processing path (P1).
